# EUROPEAN PATENT APPLICATION

(11) **EP 3 375 560 A1**
(43) Date of publication of application: **19.09.2018**
(21) Application number: 17161000.9
(22) Date of filing: 15.03.2017
(51) Int. Cl.: B23K 26/24, B23K 26/06, B23K 26/32

(54) **SIMULTANEOUS WELDING WITH TWO WELDING HEADS**

(71) Applicant: Siemens Aktiengesellschaft, 80333 München (DE)
(72) Inventor: Laux, Britta, 14059 Berlin (DE); Ott, Michael, 45470 Mülheim an der Ruhr (DE)

(57) **Abstract**

By using two laser heads which can produce different width of weld seams (4, 7) improved welding of y'-hardened nickel based alloys are possible.

## Description

The invention relates to a cladding process wherein two welding heads are used at the same time.

The weldability of y'-hardened Nickel based superalloys is traditionally poor. The creation of residual stresses due to the temperature gradient between melt pool and surrounding cool base leads to the precipitation of the y'-phase which leads to crack formation during solidification. In most superalloys the y'-phase has a smaller lattice size compared to the surrounding y-phase, leading to a negative lattice misfit.

A typical work around is welding with preheating - which comprises pre-heating the base alloy around the melt pool to more than 1273k to in situ stress relief the weld built up. Other methodologies employ ductile filler materials.

However both methods have their disadvantages, welding with pre-heating needs complex pre-heating devices, e. g. high frequency heating coils adapted to the design of the bulk in the respective area. While ductile filler materials lead to a debit in material properties.

It is therefore the aim of the invention to overcome the problem given above.

The problem is solved by a device according to claim 1 and the method according to claim 2.

In the subclaims further advantages are listed which can be arbitrarily combined with each other to yield further advantages.

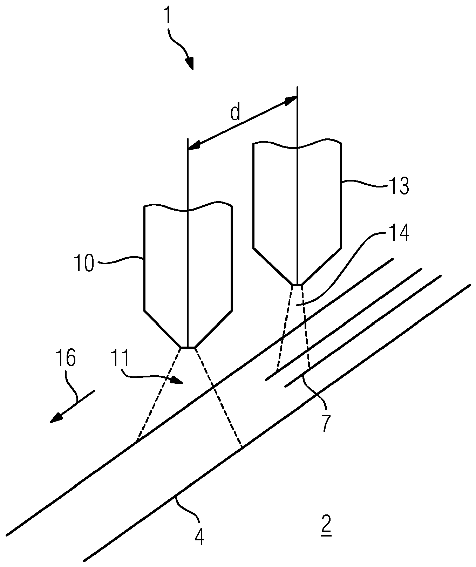

The figure shows a schematic device and how to perform the inventive method.

The idea is to employ conventional welding, especially a laser welding with powder, but with two laser heads running one after the other in close distance. The first head lays a seam with a conventional y'-hardened superalloy (negative misfit). The second head lays out a smaller seam in the middle to the first seam. The second head follows at a distance that allows to lay the seam into the first seam, while the first material is still mushy (not completely solidified). The second head supplies a Nickel based superalloy material with a positive misfit, a Nickel-Martensite or a Ni-Ti alloy, in general a material that creates compressive stresses due to precipitation formation upon solidification.

The effect is that the superposition of the solidification stresses by the formation of the y'-phase (additional tensile stresses) is counterbalanced by the formation of compressive stresses during the solidification phase within the weld bead, before complete solidification has happened. The chemistry of the powder for the second laser needs to be similar to the y'-hardened superalloy, thus the impact on the material properties after solutioning is small.

The equipment effort is quite easy, since two laser heads are attached to each other on one robot arm.

The advantage is new methodology to weld y'-hardened superalloys at room temperature without complex pre-heating devices.

The figure shows the inventive device 1.

In the figure a first welding seam 4 is shown.

The first weld seam 4 is produced by a first and forward welding head 10 with a first material and which produces the whole width of the first weld seam 4.

The first and forwarding welding head 10 is moved in the direction 16.

Behind the first welding head 10 a second welding head 13 is provided which follows the first welding head 10 at a distance d.

But the second welding head 13 produces simultaneously a smaller second weld seam 7, wherein smaller means at least 20% especially at least 50% smaller and especially in the middle of the first weld seam 4.

The materials of the weld seam 4, 7 are preferably different. Different means, that at least one alloying element more or less is present or the difference in the weight% of at least one alloying element is at least 15%.

The second head 13 supplies preferably a Nickel based superalloy material with a positive misfit, a Nickel-Martensite or a Ni-Ti alloy.

## Claims

1. Device (1) for welding,
wherein two materials can be applied simultaneously to a surface (2),
wherein two welding heads (10, 13) are provided,
which (10, 13) can be moved in a row simultaneously together and
both welding heads (10, 13) can apply the materials simultaneously together to the surface (2),
especially via weld seams (4, 7) in different width.

2. Method,
especially using the device (1) according to claim 1, wherein two welding seams (4, 7) with different materials are produced simultaneously,
especially wherein a smaller weld seam (7) is produced behind and on a broader weld seam (4).

3. Device or method according to claim 1 or 2,
wherein a laser welding head or laser welding process is used,
especially with powder.

4. Method according to any of claims 2 or 3,
wherein the two materials provided and applied by the two welding heads (10, 13) are different.

5. Method according to claim 2, 3, or 4,
wherein the first and forward head (10) lays a first weld seam (4) with a conventional y'-hardened superalloy.

6. Method or device according to any of the claims 1, 2, 3, 4 or 5,
wherein the second welding head (13) lays out a smaller, second weld seam (7),
especially in the middle to the first weld seam (4).

7. Method according to any of the claims 2, 3, 4, 5 or 6,
wherein the second welding head (13) follows at a distance (d) the first welding head (10),
that allows to lay the second material onto the first weld seam (4),
while the first material of the weld seam (4) is still mushy or not completely solidified.

8. Method according to any of the claims 4, 5, 6 or 7,
wherein the second welding head (13) supplies a Nickel based superalloy material with a positive misfit, especially a Nickel-Martensite or a Ni-Ti alloy.

9. Method according to any of the claims 2, 4, 5, 6, 7 or 8, wherein the width of the second weld seam (7) is at least 20%,
especially at least 50% smaller tan the width of the first weld seam (4).
